# EUROPÄISCHE PATENTANMELDUNG

(11) **EP 4 148 236 A1**
(43) Veröffentlichungstag der Anmeldung: **15.03.2023**
(21) Anmeldenummer: 22192081.2
(22) Anmeldetag: 25.08.2022
(51) Int. Cl.: F01D 17/16, F01D 17/20, F02C 9/20, F04D 29/56

(54) **VERSTELLANORDNUNG FÜR VERSTELLSCHAUFELN EINER STRÖMUNGSMASCHINE**

(30) Priorität: 14.09.2021 DE 102021123772
(71) Anmelder: MTU Aero Engines AG, 80995 München (DE)
(72) Erfinder: Ostermeir, Oskar, 80995 München (DE)

(57) **Zusammenfassung**

Die vorliegende Erfindung betrifft eine Verstellanordnung (20) zum Verstellen von Verstellschaufeln (10) einer Strömungsmaschine (1) mit einem Verstellring (21) zur Kopplung an die Verstellschaufeln (10) eines Schaufelkranzes (5), und einem Getriebe (25), welches eine Koppelstange (40) zur Kopplung an einen weiteren Schaufelkranz (5), sowie einen Hebel (33) und eine Schubstange (30) aufweist, wobei der Hebel (33) in einem Drehpunkt (35) drehbar gelagert ist und einen Lastarm (36) sowie einen Kraftarm (37) aufweist, wobei der Lastarm (36) des Hebels (33) an die Schubstange (30) und sein Kraftarm (37) an die Koppelstange (40) gekoppelt ist, sodass ein Versatz (42) der Koppelstange (40) über den Hebel (33) und die Schubstange (30) in eine Drehung des Verstellrings (21) um dessen Ringachse (2) umgesetzt wird, und wobei die Koppelstange (40) und die Schubstange (30) auf unterschiedlichen Seiten des Hebels (33) angeordnet sind.

## Beschreibung

### Technisches Gebiet

Die vorliegende Erfindung betrifft eine Verstellanordnung zum Verstellen von Verstellschaufeln einer Strömungsmaschine.

### Stand der Technik

Bei der Strömungsmaschine kann es sich bspw. um ein Strahltriebwerk handeln, z. B. um ein Mantelstromtriebwerk. Funktional gliedert sich die Strömungsmaschine in Verdichter, Brennkammer und Turbine. Etwa im Falle des Strahltriebwerks wird angesaugte Luft vom Verdichter komprimiert und in der nachgelagerten Brennkammer mit hinzugemischtem Kerosin verbrannt. Das entstehende Heißgas, eine Mischung aus Verbrennungsgas und Luft, durchströmt die nachgelagerte Turbine und wird dabei expandiert. Sowohl der Verdichter als auch die Turbine ist in der Regel aus mehreren Stufen mit jeweils einem Stator (Leitschaufelkranz) und einem Rotor (Laufschaufelkranz) aufgebaut.

Schaufelkränze mit verstellbaren Schaufeln werden in Verdichtern und Turbinen von Strömungsmaschinen benutzt. Eine Verstellanordnung zum Verstellen der Schaufeln kann einen Verstellring umfassen, der um eine Ringachse bzw. Längsachse der Strömungsmaschine drehbar ist, wobei diese Drehbewegung dann auf die einzelnen Schaufeln des Schaufelkranzes gekoppelt wird, bspw. mit umlaufend verteilten Verstellhebeln, die jeweils den Umlaufversatz des Verstellrings auf die jeweilige Verstellschaufel übertragen. Die vorliegende Anmeldung richtet sich schwerpunktmäßig auf den vorgelagerten Mechanismus, nämlich das Getriebe zum Verstellen des Verstellrings. Damit lässt sich der Verstellring in Umlaufrichtung versetzen, also ein Stück weit um seine Ringachse drehen.

### Darstellung der Erfindung

Der vorliegenden Erfindung liegt das technische Problem zugrunde, eine vorteilhafte Verstellanordnung für Verstellschaufeln einer Strömungsmaschine anzugeben.

Dies wird erfindungsgemäß mit der Verstellanordnung gemäß Anspruch 1 gelöst. Diese weist zusätzlich zu dem Verstellring einen Hebel und eine Schubstange auf, die den Hebel an den Verstellring koppelt. Ferner ist eine Koppelstange vorgesehen, die der Kopplung an einen oder mehrere weitere Schaufelkränze mit Verstellschaufeln dient, also über die einzelnen Stufen hinweg eine simultane Verstellung schaffen kann. Die Koppelstange koppelt dabei an einen Kraftarm des in einem Drehpunkt drehbar gelagerten Hebels, wobei dessen Lastarm an die Schubstange und damit den Verstellring koppelt.

Über den Hebel wird ein Versatz, insbesondere Axialversatz, der Koppelstange in einen zumindest anteiligen Umlaufversatz der Schubstange und damit eine Verdrehung des Verstellrings umgesetzt. Die Koppel- und die Schubstange sind dabei auf unterschiedlichen Seiten des Hebels angeordnet, sodass sich die Koppel- und die Schubstange bspw. radial betrachtet nicht kreuzen. Dies kann, wie nachstehend im Einzelnen diskutiert, eine für sich im Wesentlichen plane und dabei zum Verstellring tangentiale Anordnung des Getriebes ermöglichen, was bspw. hinsichtlich der Krafteinleitung und Genauigkeit von Vorteil sein und bspw. auch Gelenkverschleiß reduzieren kann.

Betrachtet man einen ersten Koppelpunkt der Schubstange, in dem diese an den Verstellring koppelt, und einen zweiten Koppelpunkt, in dem die Schubstange an den Hebel gekoppelt ist, so sind diese beiden Punkte in Radialrichtung betrachtet, da die beiden Stangen sich nicht kreuzen, auf derselben Seite der Koppelstange angeordnet. Dies ermöglicht die im Wesentlichen plane Anordnung. Axial betrachtet kann die Anordnung "auf unterschiedlichen Seiten des Hebels" bspw. dahingehen, dass die Koppelstange an einem Ende des Hebels angeordnet ist und sich die Schubstange am entgegengesetzten Ende des Hebels von diesem und der Koppelstange weg erstreckt.

Bevorzugte Ausführungsformen finden sich in den abhängigen Ansprüchen und der gesamten Offenbarung, wobei in der Darstellung der Merkmale nicht immer im Einzelnen zwischen Vorrichtungs- und Verfahrens- bzw. Verwendungsaspekten unterschieden wird; jedenfalls implizit ist die Offenbarung hinsichtlich sämtlicher Anspruchskategorien zu lesen. Ferner ist sie stets sowohl auf die Verstellanordnung als auch auf ein Modul bzw. eine Strömungsmaschine mit einer solchen Verstellanordnung zu lesen.

Die Angaben "axial", "radial" und "umlaufend", sowie die zugehörigen Richtungen (Axialrichtung etc.) beziehen sich im Rahmen dieser Offenbarung auf die Ringachse, um welche der Verstellring mit dem Getriebe verstellbar, also drehbar ist. Diese Ringachse fällt typischerweise mit einer Längsachse des Moduls bzw. der Strömungsmaschine zusammen, um die im Betrieb bspw. dessen bzw. deren Laufschaufelkränze rotieren. Innerhalb eines jeweiligen Schaufelkranzes, insbesondere Leitschaufelkranzes, sind die Verstellschaufeln umlaufend verteilt angeordnet, und axial versetzt können mehrere verstellbare Schaufelkränze aufeinanderfolgen. Mit der Verstellung kann der Anströmwinkel der Verstellschaufeln verändert werden, bspw. in Abhängigkeit vom Betriebszustand der Strömungsmaschine.

Gemäß einer bevorzugten Ausführungsform ist die Schubstange gegenüber einer Ebene, die der Hebel aufspannt, um den Betrag nach höchstens 10° verkippt. Weitere Obergrenzen können bspw. bei dem Betrag nach höchstens 8°, 6°, 4° bzw. 2° liegen. Bevorzugt liegt die Verkippung der Schubstange zur Ebene auch unter Berücksichtigung einer etwaigen Winkelauslenkung, die sich infolge der Verstellung ergeben kann, innerhalb eines entsprechenden Intervalls. Die Verkippung kann auch bei 0° liegen (Schubstange liegt in der Ebene), jedenfalls in einer Null-Stellung des Verstellrings. Mit der im Wesentlichen verkippungsfreien Anbindung zwischen Schubstange und Hebel kann z. B. eine vergleichsweise geradlinige Krafteinleitung erreicht werden, was den Verschleiß reduzieren und bspw. auch die Genauigkeit erhöhen kann.

Im Einzelnen kann die von dem Hebel aufgespannte Ebene bspw. dessen Drehpunkt, sowie die Koppelpunkte zu der Schubstange und der Koppelstange beinhalten. Für die Verkippung der Schubstange gegenüber dieser Ebene wird dann bspw. eine in die Schubstange gelegte Verbindungsgerade zugrunde gelegt, die deren Koppelpunkte (zum Verstellring und zum Hebel) miteinander verbindet. Im Allgemeinen kann die Schubstange an sich also auch einen gewölbten Verlauf haben, bevorzugt erstreckt sie sich jedoch geradlinig.

In bevorzugter Ausgestaltung liegt die Koppelstange in einer von dem Hebel aufgespannten Ebene, es wird auf die vorstehenden Absätze bezüglich der Definition der Ebene verwiesen, was bevorzugt mit der im Wesentlichen unverkippten Schubstange kombiniert ist. Damit kann bspw. in axialer Richtung betrachtet ein insgesamt geradliniger Aufbau erreicht werden (verringerter Verschleiß und erhöhte Genauigkeit). Damit lässt sich bspw. auch eine schräge Belastung der Schub- bzw. Koppelstange verringern, die anderenfalls bei der strukturmechanischen Auslegung zu einem höheren Gewicht der Stange(n) bzw. auch des Hebels führen könnte.

Wie nachstehend im Einzelnen diskutiert, kann das Getriebe bevorzugt weitere Hebel und Schubstangen aufweisen, die an der Koppelstange axial versetzt unterschiedlichen Schaufelkränzen bzw. Stufen zugeordnet sind. Besonders bevorzugt können diese Hebel in einer gemeinsamen Ebene liegen (ihre Koppel- und Drehpunkte also in derselben Ebene liegen). Generell hat die Koppelstange zum Verbinden der Kränze bzw. Stufen eine zumindest anteilig axiale Erstreckung, bevorzugt liegt sie parallel zur Axialrichtung. Entsprechend liegt dann in bevorzugter Ausgestaltung auch besagte Ebene, welche die Koppelstange und den oder die Hebel beinhaltet, achsparallel.

Im Allgemeinen kann der bzw. können die Hebel bspw. auch mit einem Knick oder einer Krümmung geformt sein, wobei die beiden Koppelpunkte und der Drehpunkt trotzdem eine Ebene aufspannen. In bevorzugter Ausgestaltung ist der Hebel jedoch ein insgesamt planes Bauteil, was weiter bevorzugt auch für die Hebel der anderen Kränze bzw. Stufen gilt.

Gemäß einer bevorzugten Ausführungsform liegt die Schubstange im Wesentlichen parallel zu einer Tangente an den Verstellring. Diese Tangente wird in einem ersten Koppelpunkt, in dem die Schubstange an den Verstellring gekoppelt ist, an den Verstellring gelegt. Die zur Tangente "im Wesentlichen parallele" Schubstange kann bspw. um den Betrag nach höchstens 10°, 8°, 6° bzw. 4° gegenüber der Tangente verkippt sein. Bevorzugt liegt die Schubstange über den Verstellweg hinweg in einem entsprechenden Intervall, also auch unter Berücksichtigung eines etwaigen Winkelversatzes infolge der Verstellung. Jedenfalls in einer Null-Stellung des Verstellrings kann der Winkel auch 0° betragen.

Gemäß einer bevorzugten Ausführungsform ist der erste Koppelpunkt radial höchstens 3 cm von dem Verstellring beabstandet. Im Allgemeinen kann dieser Aufhängungspunkt also bspw. auch an einem am Verstellring nach radial außen hervortretenden Zapfen angeordnet sein und dementsprechend ein Stück weit nach radial außen versetzt liegen. Bevorzugt liegt der erste Koppelpunkt jedoch möglichst nah am Ring, etwa um in der Reihenfolge der Nennung zunehmend bevorzugt höchstens 2,5 cm, 2 cm, 1,5 cm, 1 cm bzw. 0,5 cm nach radial außen versetzt, womit sich bspw. zusätzliche Verformungsmomente auf den Ring reduzieren lassen.

Gemäß einer bevorzugten Ausführungsform wird zumindest einer der Koppelpunkte der Schubstange von einem Kugelgelenk gebildet, also der erste Koppelpunkt (zum Verstellring) und/oder der zweite Koppelunkt (zum Hebel). Dies kann in der kinematischen Detailgestaltung Freiheiten eröffnen, wobei die "geradlinige" Belastung der Kugelgelenke, die sich aus dem vorliegenden Gegenstand ergibt, deren Verschleiß reduzieren kann.

Generell kann die Verstellanordnung zusätzlich zu dem Getriebe bevorzugt einen Aktor aufweisen, insbesondere einen Linearaktor. Dieser kann derart angeordnet sein, dass sein Verstellweg eine Axialkomponente hat, bevorzugt achsparallel liegt. Der Aktor kann dann bevorzugt an einen der den unterschiedlichen Kränzen bzw. Stufen zugeordneten Hebel koppeln, wobei die Verstellung von diesem Hebel auf die anderen Hebel dann mit der Koppelstange übertragen werden kann. Unabhängig von diesen Details ist der Aktor in bevorzugter Ausgestaltung derart angeordnet, dass er in axialer Richtung betrachtet mit dem Hebel und der Schubstange auf einer Geraden liegt. Diese Gerade liegt bevorzugt tangential zum Verstellring, vergleiche die vorstehenden Anmerkungen.

Wie bereits erwähnt, sind in bevorzugter Ausgestaltung mehrere Verstellringe vorgesehen, die axial versetzten Schaufelkränzen zugeordnet sind (jeweils zum Verstellen der jeweiligen Verstellschaufeln). Konkret kann es also einen zweiten Verstellring geben, der über eine zweite Schubstange und einen zweiten Hebel mit der Koppelstange derart verbunden ist, dass der zweite Hebel einen Versatz der Koppelstange, insbesondere einen Axialversatz, in einen Versatz der zweiten Schubstange umsetzt, insbesondere einen Umlaufversatz.

Gemäß einer bevorzugten Ausführungsform unterscheiden sich die axial aufeinanderfolgenden Hebel in ihren Lastarmen und/oder ihren Kraftarmen, bevorzugt beides. Der Lastarm kann bspw. bestimmen, wie weit die jeweilige Schubstange und damit der jeweiligen Verstellring versetzt wird, wobei dieser Versatz in einem verstellbaren Verdichter bspw. von axial vorne nach axial hinten abnehmen kann. Über den Kraftarm kann sich bemessen, mit welcher Kraft verstellt und damit welches Drehmoment aufgebracht wird.

Die Erfindung betrifft auch ein Modul einer Strömungsmaschine, insbesondere ein Verdichtermodul. Das Modul weist mehrere Laufschaufelkränze auf, die jeweils mit verstellbaren Schaufeln ausgestattet sind, wobei es sich insbesondere um verstellbare Leitschaufelkränze handeln kann. Jedem verstellbaren Schaufelkranz ist dabei ein Verstellring zugeordnet, wobei diese Verstellringe über das vorliegend beschriebenen Getriebe miteinander verbunden sind. Die einzelnen Verstellschaufeln können dann bevorzugt jeweils mit einem Verstellhebel an den jeweiligen Verstellring koppeln, sodass dessen Drehversatz über die Hebel die Verstellschaufeln verdreht, also deren Anströmwinkel ändert.

Die Erfindung betrifft auch eine Strömungsmaschine mit einer vorliegend offenbarten Verstellanordnung bzw. einem eben erwähnten Modul, bevorzugt ein Flugtriebwerk, besonders bevorzugt ein Mantelstromtriebwerk. Ferner betrifft die Erfindung die Verwendung einer vorliegend beschriebenen Verstellanordnung zum Verstellen von verstellbaren Verstellschaufeln.

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: eine Strömungsmaschine, nämlich ein Flugtriebwerk in einem Axialschnitt;
- Figur 2: eine erfindungsgemäße Verstellanordnung in einer Axialansicht;
- Figur 3: einen Teil der Verstellanordnung gemäß Figur 2 in einer Radialansicht;
- Figur 4: zum Vergleich eine nicht erfindungsgemäße Anordnung mit sich kreuzenden Koppel- und Schubstangen;
- Figur 5: die nicht erfindungsgemäße Anordnung gemäß Figur 4 in einer Axialansicht.

### Bevorzugte Ausführung der Erfindung

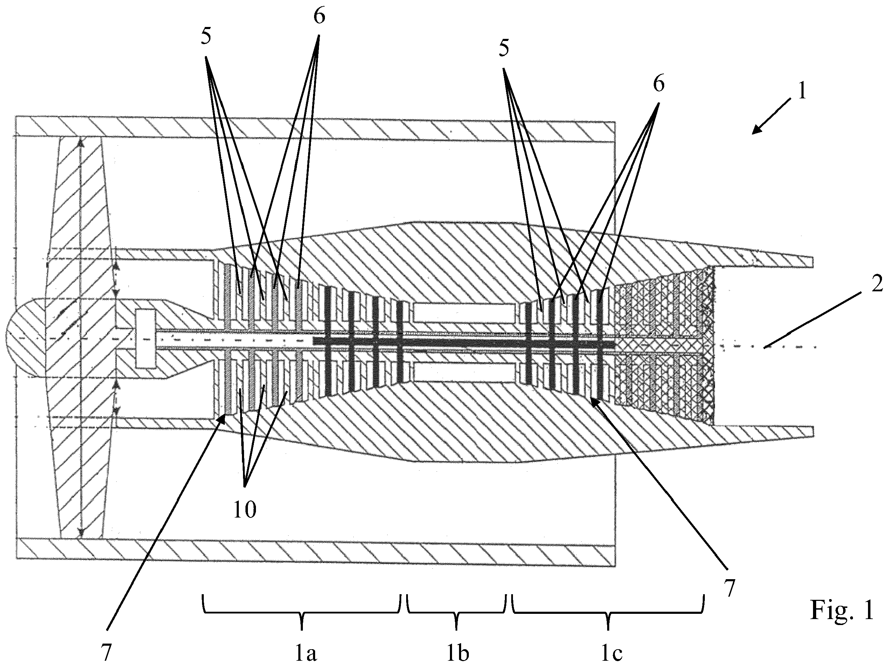

**Figur** 1 zeigt eine Strömungsmaschine 1, konkret ein Mantelstromtriebwerk, in einem Axialschnitt. Die Strömungsmaschine 1 gliedert sich funktional in Verdichter 1a, Brennkammer 1b und Turbine 1c. Sowohl der Verdichter 1a als auch die Turbine 1c sind jeweils aus mehreren Stufen aufgebaut. Jede der Stufen setzt sich aus einem Leitschaufelkranz 5 und einem Laufschaufelkranz 6 zusammen. Das Bezugszeichen 7 bezeichnet den Gaskanal, also den Verdichtergaskanal im Falle des Verdichters 1a bzw. den Heißgaskanal im Falle der Turbine 1c. Im Verdichtergaskanal wird die angesaugte Luft komprimiert, sie wird dann in der nachgelagerten Brennkammer 1b mit hinzugemischten Kerosin verbrannt. Das Heißgas durchströmt den Heißgaskanal und treibt dabei die Laufschaufelkränze 6 an, die um eine Ringachse 2 rotieren.

Im vorliegenden Beispiel sind mehrere Leitschaufelkränze 5 des Verdichters 1a mit Verstellschaufeln 10 ausgestattet, diese lassen sich zur Anpassung des Anströmwinkels verstellen. Die hier nicht gezeigte Verstellachse einer jeweiligen Verstellschaufel 10 liegt dabei jeweils im Wesentlichen radial zur Ringachse 2, die mit einer Längsachse der Strömungsmaschine zusammenfällt.

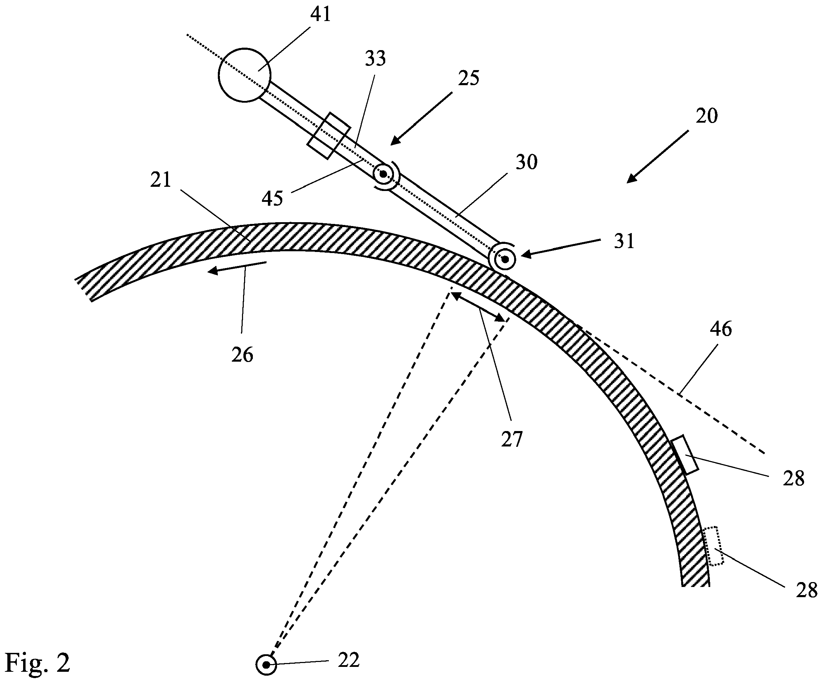

**Figur 2** zeigt eine erfindungsgemäße Verstellanordnung 20, mit der sich die Verstellschaufeln 10 verstellen lassen. Sie weist einen Verstellring 21 auf, wobei jedem Leitschaufelkranz 5 ein jeweiliger Verstellring 21 zugeordnet ist und diese Verstellringe 21 axial zueinander versetzt sind, also in einer Axialrichtung 22 zueinander beabstandet. Über ein nachstehend im Detail geschildertes Getriebe 25 können die Verstellringe 21 verdreht, nämlich in Umlaufrichtung 26 versetzt werden. Dieser Umlaufversatz 27 des Verstellrings 21 wird über einen jeweiligen Hebel 28 auf die jeweilige Verstellschaufel 10 übertragen (nicht im Einzelnen dargestellt), was die geschilderte Veränderung des Anströmwinkels ergibt.

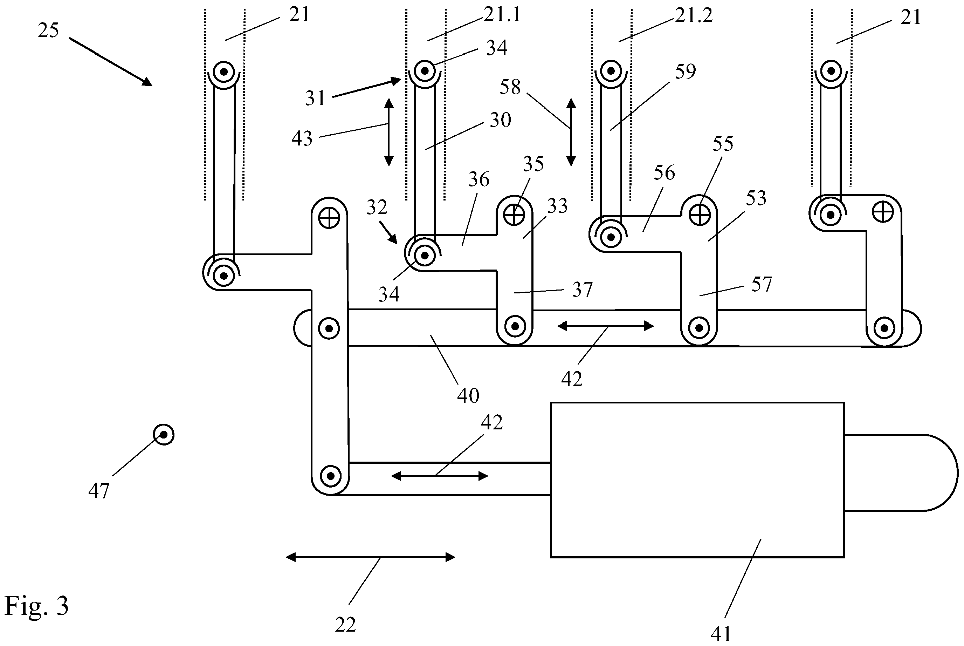

**Figur 3** zeigt in einer radialen Aufsicht das Getriebe 25, das im vorliegenden Beispiel zur simultanen Betätigung von vier axial aufeinanderfolgenden Leitschaufelkränzen 5 ausgelegt ist. Die entsprechenden Verstellringe 21 sind strichliert angedeutet. Der Verstellmechanismus wird im Folgenden exemplarisch anhand des zweiten Verstellrings 21 von links diskutiert (nachfolgend auch "erster Verstellring 21.1"), für die anderen Verstellringe 21 gilt dies analog. Zur Kopplung an den Verstellring 21 ist eine Schubstange 30 vorgesehen, die in einem ersten Koppelpunkt 31 an den Verstellring 21 und in einem zweiten Koppelpunkt 32 an einen Hebel 33 koppelt. Die Koppelpunkte 31, 32 sind dabei jeweils über ein Kugelgelenk 34 realisiert.

Der Hebel 33 ist in einem Drehpunkt 35 drehbar gelagert und weist einen Lastarm 36 sowie einen Kraftarm 37 auf. An den Lastarm 36 ist die Schubstange 30 gekoppelt, an den Kraftarm 37 hingegen eine Koppelstange 40. Diese erstreckt sich entlang der Axialrichtung 22 und verbindet die einzelnen Leitschaufelkränze 5 miteinander. Mit einem Aktor 41 lässt sich ein Axialversatz 42 erzeugen und auf die Koppelstange 40 übertragen, wobei dieser Axialversatz 42 durch die drehbare Lagerung des Hebels 33 in einen Versatz 43 der Schubstange 30 umgesetzt wird, infolgedessen also der Verstellring 21 verdreht wird.

Der Hebel 33 ist zwischen der Koppelstange 40 und der Schubstange 30 angeordnet, letztere erstreckt sich der Koppelstange 40 abgewandt vom Hebel 33 weg. Dementsprechend ist die Schubstange 30 vollständig auf einer Seite des Hebels 33 angeordnet, beide Koppelpunkte 31, 32 liegen in der Radialansicht (in Radialrichtung 47 darauf blickend) auf derselben Seite. Dies erlaubt eine insgesamt plane Anordnung der Schubstange 30, des Hebels 33 und der Koppelstange 40. Das gesamte Getriebe 25 lässt sich damit im Wesentlichen tangential zum Verstellring 21 ausrichten, vergleiche Figur 2 zur Illustration. Dort ist die vom Hebel 33 aufgespannte Ebene 45 schematisch zu erkennen, diese und damit der Hebel 33 sowie auch die Schubstange 30 liegen im Wesentlichen parallel zu einer Tangente 46.

Exemplarisch ist ferner ein zweiter Hebel 53 referenziert, der ebenfalls einen Lastarm 56 sowie einen Kraftarm 57 aufweist und in einem Drehpunkt 55 drehbar gelagert ist. Der zweite Hebel 53 ist ebenfalls mit der Koppelstange 40 verbunden und setzt den Axialversatz 42 in einen Versatz 58 der zweiten Schubstange 59 und damit des zugeordneten Verstellrings 21 um ("zweiter Verstellring 21.2"). Die Hebel 33, 53 unterscheiden sich dabei in der jeweiligen Bemessung von Lastarm 36, 56 und Kraftarm 37, 57.

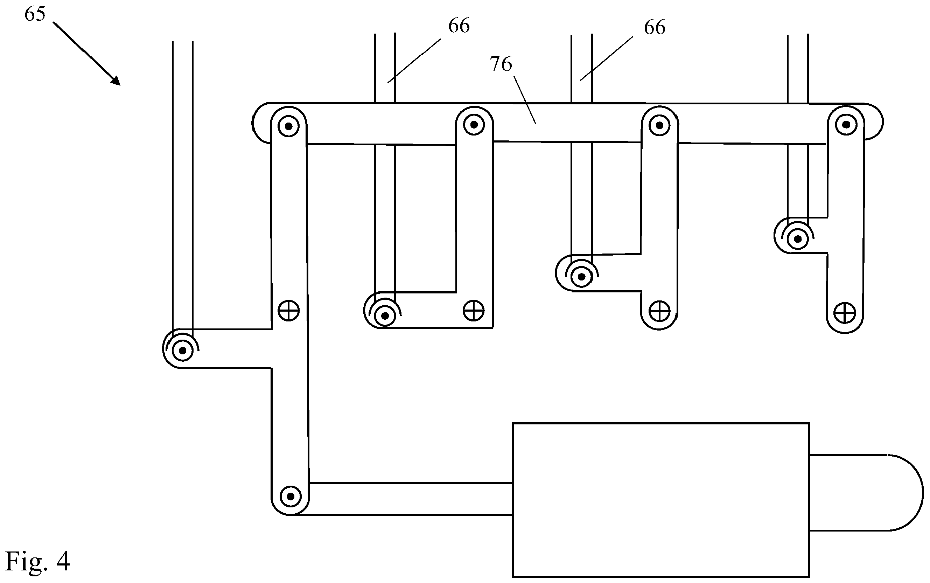

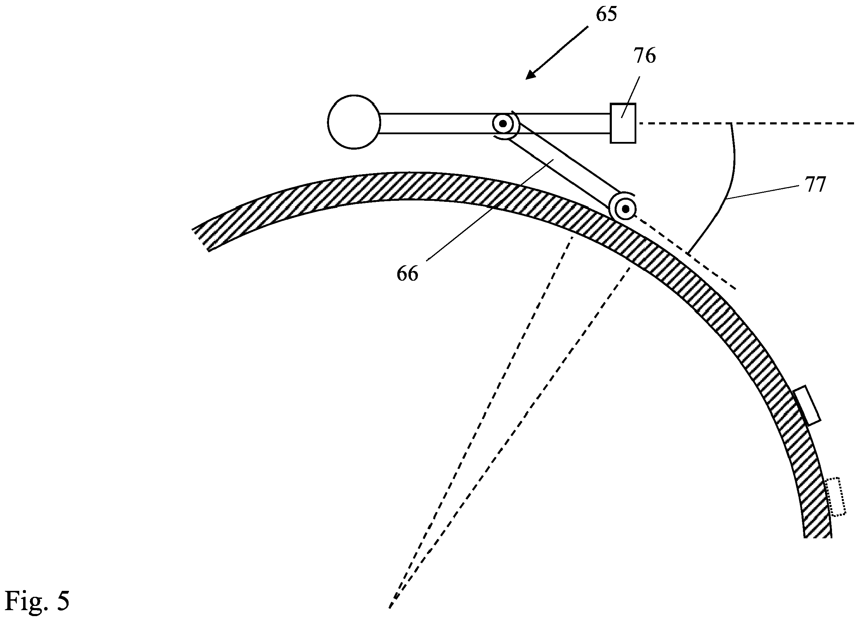

**Figur 4** zeigt zum Vergleich ein nicht erfindungsgemäß gestaltetes Getriebe 65, bei dem sich die Schubstangen 66 nicht von der Koppelstange 76 weg erstrecken, sondern diese in der Radialansicht kreuzen. Das Getriebe 65 ist deshalb mit einem Knick ausgeführt, was in der Axialansicht gemäß **Figur 5** deutlich wird. Die Schubstangen 66 sind gegenüber dem übrigen Getriebe 65 um einen Winkel 77 ausgelenkt, was eine schräge Krafteinleitung ergibt, die verschleißträchtig ist und Ungenauigkeiten zur Folge haben kann.

**BEZUGSZEICHENLISTE**

| | |
|---|---|
| Strömungsmaschine | 1 |
| Verdichter | 1a |
| Brennkammer | 1b |
| Turbine | 1c |
| Ringachse | 2 |
| Schaufelkranz (Leitschaufelkranz) | 5 |
| Laufschaufelkranz | 6 |
| Gaskanal | 7 |
| Verstellschaufel | 10 |
| Verstellanordnung | 20 |
| Verstellringe | 21 |
| Erster Verstellring | 21.1 |
| Zweiter Verstellring | 21.2 |
| Axialrichtung | 22 |
| Umlaufrichtung | 26 |
| Umlaufversatz | 27 |
| Getriebe | 25 |
| Verstellhebel | 28 |
| Schubstange | 30, 54 |
| Koppelpunkt | 31, 32 |
| Hebel | 33 |
| Kugelgelenk | 34 |
| Lastarm | 36, 56 |
| Kraftarm | 37, 57 |
| Koppelstange | 40 |
| Aktor | 41 |
| Axialversatz | 42 |
| Versatz (Schubstange) | 43 |
| Aufgespannte Ebene | 45 |
| Tangente | 46 |
| Radialrichtung | 47 |
| Hebel | 53 |
| Drehpunkt | 55 |
| Versatz | 58 |
| Schubstange | 59 |
| Getriebe | 65 |
| Schubstange | 66 |
| Koppelstange | 76 |
| Winkel | 77 |

## Patentansprüche

1. Verstellanordnung (20) zum Verstellen von Verstellschaufeln (10) einer Strömungsmaschine (1), mit
einem Verstellring (21) zur Kopplung an die Verstellschaufeln (10) eines Schaufelkranzes (5), und
einem Getriebe (25), welches eine Koppelstange (40) zur Kopplung an einen weiteren Schaufelkranz (5), sowie einen Hebel (33) und eine Schubstange (30) aufweist,
wobei der Hebel (33) in einem Drehpunkt (35) drehbar gelagert ist und einen Lastarm (36) sowie einen Kraftarm (37) aufweist,
wobei der Lastarm (36) des Hebels (33) an die Schubstange (30) und sein Kraftarm (37) an die Koppelstange (40) gekoppelt ist, sodass ein Versatz (42) der Koppelstange (40) über den Hebel (33) und die Schubstange (30) in eine Drehung des Verstellrings (21) um dessen Ringachse (2) umgesetzt wird,
und wobei die Koppelstange (40) und die Schubstange (30) auf unterschiedlichen Seiten des Hebels (33) angeordnet sind.

2. Verstellanordnung (20) nach Anspruch 1, bei welcher die Schubstange (30) gegenüber einer von dem Hebel (33) aufgespannten Ebene (45) um den Betrag nach höchstens 10° verkippt ist.

3. Verstellanordnung (20) nach Anspruch 1 oder 2, bei welcher die Koppelstange (40) in einer von dem Hebel (33) aufgespannten Ebene (45) liegt.

4. Verstellanordnung (20) nach einem der vorstehenden Ansprüche, bei welcher der Hebel (33) ein insgesamt planes Bauteil ist.

5. Verstellanordnung (20) nach einem der vorstehenden Ansprüche, bei welcher die Schubstange (30) zu einer Tangente (46), die in einem ersten Koppelpunkt (31), in dem die Schubstange (30) an den Verstellring (21) gekoppelt ist, an den Verstellring (21) gelegt wird, um den Betrag nach höchstens 10° verkippt ist.

6. Verstellanordnung (20) nach einem der vorstehenden Ansprüche, bei welcher ein erster Koppelpunkt (31), in dem die Schubstange (30) an den Verstellring (21) gekoppelt ist, um radial höchstens 3 cm von dem Verstellring (21) beabstandet ist.

7. Verstellanordnung (20) nach einem der vorstehenden Ansprüche, bei welcher die Schubstange (30) in einem ersten Koppelpunkt (31) an den Verstellring (21) gekoppelt ist und in einem zweiten Koppelpunkt (32) an den Hebel (33) gekoppelt ist, wobei zumindest einer der Koppelpunkte (31, 32) von einem Kugelgelenk (34) gebildet wird.

8. Verstellanordnung (20) nach einem der vorstehenden Ansprüche, mit einem Aktor (41) zum Verstellen des Hebels (33) und der Schubstange (30), wobei der Aktor (41), der Hebel (33) und die Schubstange (30) axial betrachtet auf einer Geraden liegen.

9. Verstellanordnung (20) nach einem der vorstehenden Ansprüche, mit einem zweiten Verstellring (21.2), der zur Kopplung an Verstellschaufeln (10) eines weiteren Schaufelkranzes (5) vorgesehen ist, wobei die Verstellringe (21, 21.2) axial versetzt sind und die Koppelstange (40) die axial versetzten Verstellringe (21, 21.2) miteinander koppelt.

10. Verstellanordnung (20) nach Anspruch 9, bei welcher der zweite Verstellring (21.2) über eine zweite Schubstange (54) und einen zweiten Hebel (53) mit der Koppelstange (40) verbunden ist, wobei der zweite Hebel (53) in einem Drehpunkt (55) drehbar gelagert ist und einen Lastarm (56) sowie einen Kraftarm (57) aufweist, wobei sich der Lastarm (56) und/oder der Kraftarm (57) des zweiten Hebels (53) von dem ersten Hebel (33) unterscheiden.

11. Modul (1a, 1b) mit Leitschaufelkränzen (5), die jeweils verstellbare Verstellschaufeln (10) aufweisen, und mit einer Verstellanordnung (20) nach Anspruch 9 oder 10, wobei die Verstellschaufeln (10) eines jeweiligen Leitschaufelkranzes (5) jeweils über einen Verstellhebel (28) an einen jeweiligen Verstellring (21) gekoppelt sind.

12. Strömungsmaschine (1), insbesondere Flugtriebwerk, mit einer Verstellanordnung (20) nach einem der Ansprüche 1 bis 10 oder einem Modul nach Anspruch 11.

13. Verwendung einer Verstellanordnung (20) nach einem der Ansprüche 1 bis 10 oder eines Moduls (1a, 1b) nach Anspruch 11 oder einer Strömungsmaschine (1) nach Anspruch 12 zum Verstellen von verstellbaren Verstellschaufeln (10).
